# EUROPEAN PATENT SPECIFICATION

(11) **EP 4 292 737 B1**
(45) Date of publication and mention of the grant of the patent: **14.10.2026**
(21) Application number: 23165220.7
(22) Date of filing: 29.03.2023
(51) Int. Cl.: B23B 29/034

(54) **FINISHING BORING MACHINE FOR HIGH-PRECISION WHEEL HUB HOLE**
FEINBOHRMASCHINE FÜR HOCHPRÄZISES RADNABENLOCH
MACHINE DE FINITION DE PERÇAGE POUR TROU DE MOYEU DE ROUE DE HAUTE PRÉCISION

(30) Priority: 21.02.2023 CN 202310145373
(43) Date of publication of application: 20.12.2023
(73) Proprietor: NSH-CTI Machine Tool (Jiangxi) Co., Ltd., Nanchang Jiangxi 330000 (CN)
(72) Inventor: ZHOU, Haiquan, Nanchang, 330000 (CN); JIANG, Xi, Nanchang, 330000 (CN); ZHU, Desheng, Nanchang, 330000 (CN); YANG, Jianfeng, Nanchang, 330000 (CN); WANG, Wei, Nanchang, 330000 (CN); DENG, Jibo, Nanchang, 330000 (CN); ZHOU, Jincheng, Nanchang, 330000 (CN); HONG, Yulin, Nanchang, 330000 (CN); ZHANG, Xiaolong, Nanchang, 330000 (CN)
(74) Representative: JD&P Patent Attorneys Joanna Dargiewicz & Partners

(56) References cited:
- EP-A1- 0 022 569
- CN-A- 103 639 833
- CN-A- 106 141 762
- CN-U- 201 889 678
- CN-U- 204 123 180
- US-A- 2 358 741
- US-A- 5 503 508
- US-A1- 2005 245 178
- US-A1- 2015 020 654
- US-A1- 2018 133 854
- US-A1- 2020 198 022

## Description

### TECHNICAL FIELD

The present disclosure relates to railway vehicle equipment machinery, and in particular, to a finishing boring machine for a high-precision wheel hub hole.

### BACKGROUND

At present, the high-speed railway technology is continuously changing, and the train runs increasingly fast, which constantly updates the design requirements of wheels and has higher requirements for processing of wheel hub holes. Further, the corresponding equipment machinery needs to be updated in time to adapt to the progress of technology. The wheel hub holes require high precision, and are mainly processed by the vertical lathe traditionally, which has low production efficiency and difficult quality control, and cannot meet the current technical development requirements. A known turning machine is disclosed in CN 201 889 678 U, which discloses a horizontal turning machine having a slip ring that is arranged at one end of a machine chassis to supply electricity through a cable to a motor arranged at an opposite end of the machine chassis, or alternatively a motor is arranged to drive a slide table through a bevel gear train. EP 0 022 569 A1 discloses a finishing boring machine with a CNC facing head that has a slip ring and two spiral bevel gears.

### SUMMARY OF PRESENT INVENTION

A technical problem to be solved by the present disclosure is to provide a finishing boring machine for a high-precision wheel hub hole, aiming at low production efficiency and difficult quality control of an existing wheel hub hole machining boring machine.

To solve the above technical problem, embodiments of the present disclosure provide a finishing boring machine for a high-precision wheel hub hole, as defined in claim 1.

The boring machine body is a main structure of the finishing boring machine for the wheel hub hole, and is configured to support the finishing boring machine for the wheel hub hole.

The hydraulic automatic centering fixture is configured to place a to-be-processed workpiece, and is arranged on the boring machine body.

The CNC vertical sliding table is configured to control the spindle box, the CNC facing head and the cutter assembly to move up and down, and is arranged on the boring machine body.

The spindle box is configured to control rotation speeds of the CNC facing head and the cutter assembly, and is arranged on the CNC vertical sliding table.

The CNC facing head is configured to control a horizontal distance between the cutter assembly and the to-be-processed workpiece, and is arranged on the spindle box.

The cutter assembly is configured to process the to-be-processed workpiece, and is arranged on the CNC facing head.

The CNC facing head includes an alternating current (AC) servo motor, a driving shaft, a ball screw, a sliding member, and a linear guide. The AC servo motor is connected with the driving shaft through a coupling. The sliding member is fixedly connected with the ball screw, and the driving shaft is engaged with the ball screw, so as to drive the ball screw and the sliding member and move the cutter assembly on the linear guide.

The CNC facing head further includes a conductive slip ring, the coupling, a first spiral bevel gear and a second spiral bevel gear. The conductive slip ring is configured for power distribution of the AC servo motor. The AC servo motor is connected with one end of the driving shaft through the coupling, so as to drive the driving shaft. The first spiral bevel gear is located at the other end of the driving shaft, the second spiral bevel gear is located on the ball screw, and the first spiral bevel gear is engaged with the second spiral bevel gear.

Preferably, the hydraulic automatic centering fixture includes a fixture positioning base and a fixture three-claw synchronous mechanism. The fixture three-claw synchronous mechanism includes three hydraulic motors and three trapezoidal lead screws, and each of the hydraulic motors is connected with one end of each of the trapezoidal lead screws. A first bevel gear is located at a center of the fixture positioning base, a second bevel gear is located at the other end of each of the trapezoidal lead screws, and the first bevel gear and the second bevel gear are engaged with each other, so as to realize synchronous clamping and loosening of the three trapezoidal lead screws.

According to the invention, the CNC vertical sliding table includes a sliding table column, a sliding table body, a sliding table servo motor, a sliding table balance cylinder, a reducer, a leadscrew nut pair, and a sliding table linear guide. The sliding table column is connected with the boring machine body, and is configured to support the CNC vertical sliding table. The sliding table servo motor is arranged on the sliding table column. The sliding table servo motor is connected with the reducer. The reducer drives the leadscrew nut pair, so as to drive the sliding table body connected with the leadscrew nut pair to move on the sliding table linear guide. The sliding table body is connected with the spindle box. The sliding table balance cylinder counterweights the CNC vertical sliding table.

Preferably, the spindle box includes a main motor. The spindle box is connected with the driving shaft to control the rotation speed of the CNC facing head. The main motor is configured for speed regulation, a rotation speed of a spindle in the spindle box ranges from 50-500 rpm, and when a frequency is 50 Hz, the spindle box has a rotation speed of n=250 rpm.

Preferably, the cutter assembly includes a depth sensing switch, a first cutter, and a second cutter. The depth sensing switch is configured to determine a distance between the cutter assembly and the to-be-processed workpiece, the first cutter is configured for precision processing, and the second cutter is used for semi-precision processing.

Preferably, the finishing boring machine for a high-precision wheel hub hole further includes a hydraulic system and an electrical control system. The hydraulic system is connected with the hydraulic automatic centering fixture to provide hydraulic power for the hydraulic automatic centering fixture. The electrical control system is connected with the finishing boring machine body to control electric energy provided to the finishing boring machine.

Preferably, the finishing boring machine for a high-precision wheel hub hole further includes a machine protection component. The machine protection component is arranged on the boring machine body, and protects internal parts of the finishing boring machine from damage together with the boring machine body. The machine protection component adopts a stainless steel telescopic protective cover.

Preferably, the finishing boring machine for a high-precision wheel hub hole further includes a lubricator. The lubricator is arranged on each of the CNC vertical sliding table and the spindle box to lubricate internal parts of the finishing boring machine.

Preferably, the finishing boring machine for a high-precision wheel hub hole further includes an automatic chip removal system. The automatic chip removal system is arranged in the boring machine body. The automatic chip removal system includes a chain-plate type automatic chip remover and an iron chip collection box. The chain-plate type automatic chip remover is configured to collect iron chips generated during processing and clear the iron chips to the iron chip collection box, so as to realize automatic cleaning of the iron chips generated.

The embodiments of the present disclosure have the following beneficial effects:

(1) The finishing boring machine for the wheel hub hole provided by the embodiments of the present disclosure controls the CNC facing head to move up and down through the CNC vertical sliding table, controls the rotation speed of the CNC facing head through the spindle box, and drives the cutter assembly to move along the linear guide through the CNC facing head horizontally, so as to realize refined processing of the to-be-processed workpiece. Such CNC operations ensure quality of wheel hub holes and greatly improve production efficiency.

(2) The embodiments of the present disclosure further include the machine protection component, the lubricator, and the automatic chip removal system, which provides protection on the body of the finishing boring machine for the wheel hub hole, provides automatic lubrication for important parts of the finishing boring machine for the wheel hub hole, and automatically discharges and collects iron chips generated by the finishing boring machine for the wheel hub hole. Therefore, automatic processing of the finishing boring machine for the wheel hub hole in all aspects is realized, the time spent in manual cleaning is reduced, and the operation time of the machine is ensured.

### BRIEF DESCRIPTION OF THE DRAWINGS

To describe the technical solutions in the embodiments of the present disclosure or in the prior art more clearly, the following briefly describes the accompanying drawings required for describing the embodiments or the prior art. Apparently, the accompanying drawings in the following description show merely some embodiments of the present disclosure.
FIG 1 is a main view structure diagram of a first embodiment provided by the present disclosure;
FIG 2 is a top view structure diagram of the first embodiment provided by the present disclosure;
FIG 3 is a side view structure diagram of the first embodiment provided by the present disclosure; and
FIG 4 is a partial enlarged structure diagram of a CNC facing head of the first embodiment provided by the present disclosure.

Reference numerals: 1-boring machine body, 2-hydraulic automatic centering fixture, 201-fixture positioning base, 202-fixture three-claw synchronous mechanism, 203-hydraulic motor, 204-trapezoidal lead screw, 205-first bevel gear, 206-second bevel gear, 3-CNC vertical sliding table, 301-sliding table column, 302-sliding table body, 303-sliding table servo motor, 304-sliding table balance cylinder, 305-reducer, 306-leadscrew nut pair, 307-sliding table linear guide, 4-spindle box, 401-main motor, 5-CNC facing head, 501-AC servo motor, 502-conductive slip ring, 503-coupling, 504-driving shaft, 505-first spiral bevel gear, 506-ball screw, 507-second spiral bevel gear, 508-linear guide, 509-sliding member, 6-cutter assembly, 601-depth sensing switch, 602-first cutter, 603-second cutter, 7-hydraulic system, 8-electrical control system, 9-machine protection component, 10-lubricator, 11-automatic chip removal system, 1101-chain-plate type automatic chip remover, and 1102-iron chip collection box.

### DETAILED DESCRIPTION OF THE EMBODIMENTS

The technical solutions of the embodiments of the present disclosure are clearly and completely described below with reference to the accompanying drawings.

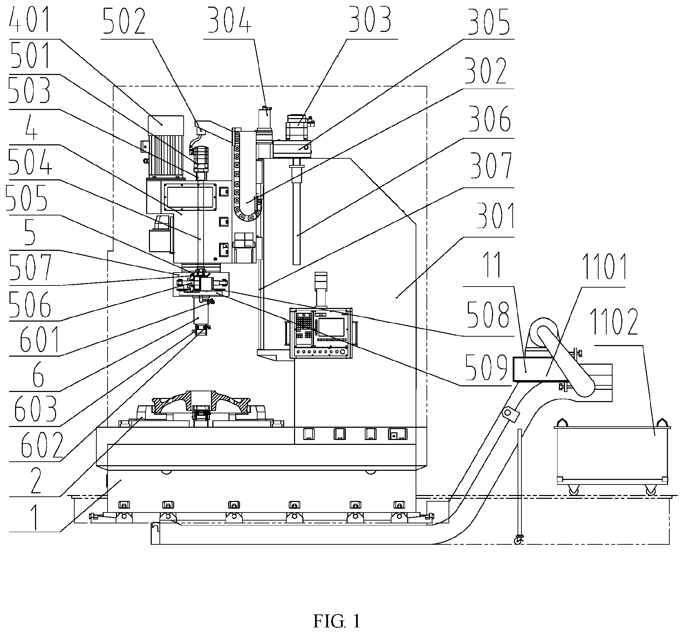

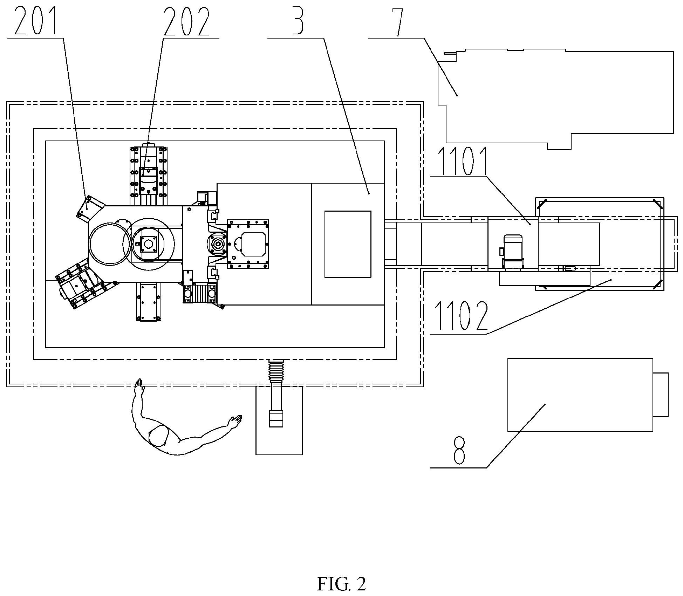

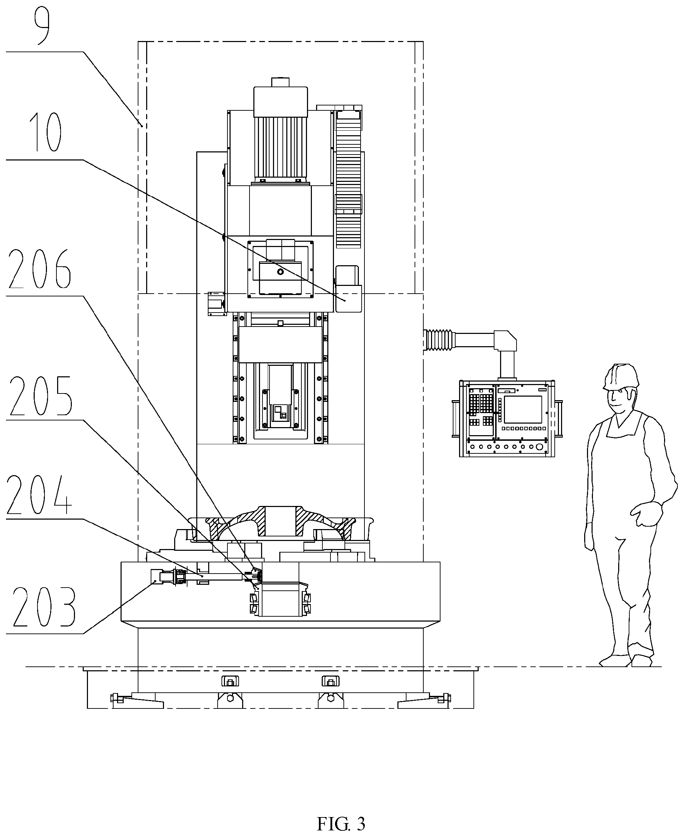

Referring to FIG 1 to FIG 3, a specific implementation of the present disclosure provides a finishing boring machine for a high-precision wheel hub hole. The finishing boring machine for the wheel hub hole includes a boring machine body 1, a hydraulic automatic centering fixture 2, a CNC vertical sliding table 3, a spindle box 4, a CNC facing head 5, a cutter assembly 6, a hydraulic system 7, an electrical control system 8, a machine protection component 9, a lubricator 10, and an automatic chip removal system 11. The boring machine body 1 is made of cast iron, is a main structure of the finishing boring machine for the wheel hub hole, and is configured to support the finishing boring machine for the wheel hub hole. The hydraulic automatic centering fixture 2 is configured to place a to-be-processed workpiece, can realize automatic clamping and loosening, and is arranged on the boring machine body. The CNC vertical sliding table 3 is configured to control the spindle box 4, the CNC facing head 5 and the cutter assembly 6 to move up and down, and is arranged on the boring machine body. The spindle box 4 is made of cast iron, is configured to control rotation speeds of the CNC facing head 5 and the cutter assembly 6, and is arranged on the CNC vertical sliding table 3. The CNC facing head 5 is configured to control a horizontal distance between the cutter assembly 6 and the to-be-processed workpiece, and is arranged on the spindle box. The cutter assembly 6 is configured to process the to-be-processed workpiece, and is arranged on the CNC facing head 5. The hydraulic system 7 is connected with the hydraulic automatic centering fixture 2 to provide hydraulic power for the hydraulic automatic centering fixture 2. The electrical control system 8 is connected with the finishing boring machine body to control electric energy provided to the finishing boring machine. The machine protection component 9 adopts a stainless steel telescopic protective cover, protects internal parts of the finishing boring machine from damage together with the boring machine body, and is arranged on the boring machine body 1. The lubricator 10 is arranged on each of the CNC vertical sliding table 3 and the spindle box 4 to lubricate internal parts of the finishing boring machine. The automatic chip removal system 11 is arranged in the boring machine body 1, and is configured to clear iron chips generated during processing by the finishing boring machine for the wheel hub hole.

The hydraulic automatic centering fixture 2 includes a fixture positioning base 201 and a fixture three-claw synchronous mechanism 202. The fixture positioning base 201 is configured to install the fixture three-claw synchronous mechanism 202, and cooperate with the fixture three-claw synchronous mechanism 202 to realize automatic clamping and loosening of the to-be-processed workpiece. A first bevel gear 205 is located at a center of the fixture positioning base 201. The fixture three-claw synchronous mechanism 202 includes three hydraulic motors 203 and three trapezoidal lead screws 204. A second bevel gear 206 is located at the end of the trapezoidal lead screw 204 away from the hydraulic motor 203. Under the action of the hydraulic system 7, the hydraulic motor 203 provides an outward or inward force on the trapezoidal lead screw 204. The trapezoidal lead screw 204 drives the second bevel gear 206 to be engaged with the first bevel gear 205, and the three trapezoidal lead screws 204 are clamped inwards or loosened outwards simultaneously. The hydraulic automatic centering fixture 2 realizes automatic clamping and loosening of the to-be-processed workpiece.

The CNC vertical sliding table 3 includes a sliding table column 301, a sliding table body 302, a sliding table servo motor 303, a sliding table balance cylinder 304, a reducer 305, a leadscrew nut pair 306, and a sliding table linear guide 307. The sliding table column 301 is connected with the boring machine body 1, and is configured to support the CNC vertical sliding table 3. The sliding table servo motor 303 is arranged on the sliding table column 301. The sliding table servo motor 303 is connected with the reducer 305. The reducer 305 is in driving connected with the leadscrew nut pair 306 to drive the leadscrew nut pair 306. The leadscrew nut pair 306 is connected with the sliding table body 302. The sliding table balance cylinder 304 counterweights the CNC vertical sliding table 3. Under the drive of the sliding table servo motor 303, the reducer 305 drives the leadscrew nut pair 306. The leadscrew nut pair 306 drives the sliding table body 302 to move back and forth on the sliding table linear guide 307. The sliding table body 302 is connected with the spindle box 4, the spindle box 4 is connected with the CNC facing head 5, and the CNC facing head 5 is connected with the cutter assembly 6. Finally, the spindle box 4, the CNC facing head 5, and the cutter assembly 6 are driven to move up and down together. The CNC vertical sliding table 3 realizes digital control of a horizontal height of the cutter assembly 6.

The spindle box 4 includes a main motor 401. The main motor 401 adopts a variable frequency motor for speed regulation, which can control a rotation speed of a spindle in the spindle box 4. The rotation speed of the spindle in the spindle box 4 ranges from 50-500 rpm, and when a frequency of the main motor 401 is 50 Hz, the spindle box has a rotation speed of n=250 rpm. The spindle in the spindle box 4 is connected with the CNC facing head 5, and the CNC facing head 5 is connected with the cutter assembly 6. The spindle box 4 realizes digital control of the rotation speed of the cutter assembly, and realizes rough and finish machining of the to-be-processed workpiece.

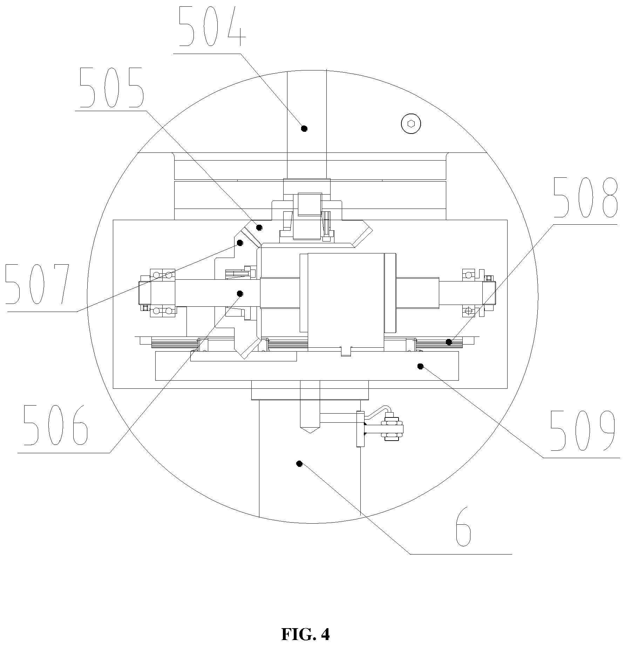

The CNC facing head 5 includes an AC servo motor 501, a conductive slip ring 502, a coupling 503, a driving shaft 504, a first spiral bevel gear 505, a ball screw 506, a second spiral bevel gear 507, a sliding member 509, and a linear guide 508. The conductive slip ring 502 is configured for power distribution of the AC servo motor 501. The AC servo motor 501 is connected with one end of the driving shaft 504 through the coupling 503. The first spiral bevel gear 505 is located at the other end of the driving shaft 504. The second spiral bevel gear 507 is located on the ball screw 506. The first spiral bevel gear 505 is engaged with the second spiral bevel gear 507. The sliding member 509 is fixedly connected with the ball screw 506, and is located on the linear guide 508. Referring to FIG 4, when the AC servo motor 501 drives the driving shaft 504 through the coupling 503, the first spiral bevel gear 505 drives the second spiral bevel gear 507. The ball screw 506 moves left and right in the horizontal direction, and the sliding member 509 follows the ball screw 506 to move left and right in the horizontal direction on the linear guide 508. The sliding member 509 is connected with the cutter assembly 6. The sliding member 509 moves left and right in the horizontal direction, and the cutter assembly 6 follows the sliding member 509 to move left and right in the horizontal direction. The CNC facing head 5 realizes digital control of a horizontal distance between the cutter assembly 6 and the to-be-processed workpiece, and achieves automatic processing of a hub hole with a boring diameter in a range of φ 130-φ 500 mm.

The cutter assembly 6 includes a depth sensing switch 601, a first cutter 602, and a second cutter 603. The depth sensing switch 601 is configured to determine a distance between the cutter assembly 6 and the to-be-processed workpiece, the first cutter 602 is configured for precision processing, and the second cutter 603is used for semi-precision processing, so as to realize various degrees of processing of the to-be-processed workpiece.

The lubricator 10 is arranged on each of the sliding table column 301 and the spindle box 4 to lubricate the leadscrew nut pair 306 of the CNC vertical sliding table 3, the sliding table linear guide 307, and the bearing of the spindle box 4. Therefore, the smoothness of the internal parts of the finishing boring machine is automatically maintained.

The automatic chip removal system 11 includes a chain-plate type automatic chip remover 1101 and an iron chip collection box 1102. The chain-plate type automatic chip remover 1101 is arranged in the boring machine body 1, and is located below the hydraulic automatic centering fixture 2. Iron chips generated by the processing of the to-be-processed workpiece fall into the chain-plate type automatic chip remover 1101. The chain-plate type automatic chip remover 1101 centrally clears the iron chips into the iron chip collection box 1102, so as to realize automatic cleaning of the iron chips.

In conclusion, according to the finishing boring machine for the wheel hub hole, the CNC vertical sliding table 3, the spindle box 4, and the CNC facing head 5 are used to complete the CNC of the orientation and rotation speed of the cutter assembly 6. The hydraulic automatic centering fixture 2 is used to automatically control the clamping and loosening of the to-be-processed workpiece. The lubricator 10 is used to automatically maintain the internal parts of the finishing boring machine. The automatic chip removal system 11 is used to automatically clear the generated iron chips. The machine protection component 9 protects the finishing boring machine for the wheel hub hole. Therefore, all-around CNC and automation of the finishing boring machine for the wheel hub hole is realized, which ensures quality of wheel hub holes and greatly improves production efficiency.

The above disclosed is only a preferred embodiment of the present disclosure, and definitely should not be used to limit the scope of the claims of the present disclosure.

## Claims

1. A finishing boring machine for a high-precision wheel hub hole, comprising: a boring machine body (1), a hydraulic automatic centering fixture (2), a computer numerical control (CNC) vertical sliding table (3), a spindle box (4), a CNC facing head (5), and a cutter assembly (6), wherein
the boring machine body (1) is a main structure of the finishing boring machine, and is configured to support the finishing boring machine;
the hydraulic automatic centering fixture (2) is arranged on the boring machine body (1) and is configured to place a to-be-processed workpiece;
the CNC vertical sliding table (3) is arranged on the boring machine body (1) and is configured to control the spindle box (4), the CNC facing head (5) and the cutter assembly (6) to move up and down;
the spindle box (4) is arranged on the CNC vertical sliding table (3) and is configured to control rotation speeds of the CNC facing head (5) and the cutter assembly (6);
the CNC facing head (5) is arranged on the spindle box (4) and is configured to control a horizontal distance between the cutter assembly (6) and the to-be-processed workpiece;
the cutter assembly (6) is arranged on the CNC facing head (5) and is configured to process the to-be-processed workpiece; and
the CNC facing head (5) comprises an alternating current (AC) servo motor (501), a driving shaft (504), a ball screw (506), a sliding member (509), and a linear guide (508); the AC servo motor (501) is connected with the driving shaft (504) through a coupling (503); and the sliding member (509) is fixedly connected with the ball screw (506), and the driving shaft (504) is engaged with the ball screw (506), so as to drive the ball screw (506) and the sliding member (509) and move the cutter assembly (6) on the linear guide (508),
wherein the CNC facing head (5) further comprises a conductive slip ring (502), the coupling (503), a first spiral bevel gear (505) and a second spiral bevel gear (507); the conductive slip ring (502) is configured for power distribution of the AC servo motor (501); the AC servo motor (501) is connected with one end of the driving shaft (504) through the coupling (503), so as to drive the driving shaft (504); and the first spiral bevel gear (505) is located at the other end of the driving shaft (504), the second spiral bevel gear (507) is located on the ball screw (506), and the first spiral bevel gear (505) is engaged with the second spiral bevel gear (507);
the CNC vertical sliding table (3) includes a sliding table column (301), a sliding table body (302), a sliding table servo motor (303), a sliding table balance cylinder (304), a reducer (305), a leadscrew nut pair (306), and a sliding table linear guide (307); the sliding table column (301) is connected with the boring machine body (1), and is configured to support the CNC vertical sliding table (3); the sliding table servo motor (303) is arranged on the sliding table column (301); the sliding table servo motor (303) is connected with the reducer (305); the reducer (305) is in driving connection with the leadscrew nut pair (306) to drive the leadscrew nut pair (306); the leadscrew nut pair (306) is connected with the sliding table body (302); the sliding table balance cylinder (304) counterweights the CNC vertical sliding table (3).

2. The finishing boring machine according to claim 1, wherein the spindle box (4) comprises a main motor (401); the spindle box (4) is connected with the driving shaft (504) to control the rotation speed of the CNC facing head (5); and the main motor (401) is configured for speed regulation, a rotation speed of a spindle in the spindle box (4) ranges from 50-500 rpm, and when a frequency is 50 Hz, the spindle box (4) has a rotation speed of 250 rpm.

3. The finishing boring machine according to claim 1, further comprising a hydraulic system (7) and an electrical control system (8), wherein the hydraulic system (7) is connected with the hydraulic automatic centering fixture (2) to provide hydraulic power for the hydraulic automatic centering fixture (2); and the electrical control system (8) is connected with the finishing boring machine body (1) to control electric energy provided to the finishing boring machine

4. The finishing boring machine according to claim 1, further comprising a machine protection component (9), wherein the machine protection component (9) is arranged on the boring machine body (1), and protects internal parts of the finishing boring machine from damage together with the boring machine body (1); and the machine protection component (9) adopts a stainless steel telescopic protective cover.

5. The finishing boring machine according to claim 1, further comprising a lubricator (10), wherein the lubricator (10) is arranged on each of the CNC vertical sliding table (3) and the spindle box (4) to lubricate internal parts of the finishing boring machine.

6. The finishing boring machine according to claim 1, further comprising an automatic chip removal system (11), wherein the automatic chip removal system (11) is arranged in the boring machine body (1); the automatic chip removal system (11) comprises a chain-plate type automatic chip remover (1101) and an iron chip collection box (1102); and the chain-plate type automatic chip remover (1101) is configured to collect iron chips generated during processing and clear the iron chips to the iron chip collection box (1102), so as to realize automatic cleaning of the iron chips generated.

## Patentansprüche

1. Feinbohrmaschine für eine hochpräzise Radnabenbohrung, **dadurch gekennzeichnet, dass** sie Folgendes umfasst: ein Maschinenbett (1), eine hydraulische selbstzentrierende Spannvorrichtung (2), einen CNC-Vertikalschlitten (3), einen Spindelstock (4), einen CNC-Plandrehkopf (5) und ein Werkzeug (6);
wobei das Maschinenbett (1) die Hauptstruktur der Feinbohrmaschine für Radnabenbohrungen bildet und zum Tragen der Feinbohrmaschine für Radnabenbohrungen dient;
wobei die hydraulische selbstzentrierende Spannvorrichtung (2) zum Aufnehmen eines zu bearbeitenden Werkstücks dient und auf dem Maschinenbett (1) montiert ist;
wobei der CNC-Vertikalschlitten (3) dazu dient, den Spindelstock (4), den CNC-Plandrehkopf (5) und das Werkzeug (6) so zu steuern, dass sie sich aufwärts und abwärts bewegen, und auf dem Maschinenbett (1) montiert ist;
wobei der Spindelstock (4) zum Einstellen der Drehzahl des CNC-Plandrehkopfs (5) und des Werkzeugs (6) dient und auf dem CNC-Vertikalschlitten (3) montiert ist;
wobei der CNC-Plandrehkopf (5) zum Steuern eines horizontalen Abstands zwischen dem Werkzeug (6) und dem zu bearbeitenden Werkstück dient und auf dem Spindelstock (4) montiert ist;
wobei das Werkzeug (6) zum Bearbeiten des zu bearbeitenden Werkstücks dient und auf dem CNC-Plandrehkopf (5) montiert ist;
wobei der CNC-Plandrehkopf (5) einen Wechselstrom-Servomotor (501), eine Antriebswelle (504), eine Kugelumlaufspindel (506), einen Schieber (509) und eine Linearführungsschiene (508) umfasst; wobei der Wechselstrom-Servomotor (501) über eine Kupplung (503) mit der Antriebswelle (504) verbunden ist; wobei der Schieber (509) fest mit der Kugelumlaufspindel (506) verbunden ist; und wobei die Antriebswelle (504) mit der Kugelumlaufspindel (506) in Eingriff steht und die Kugelumlaufspindel (506) und den Schieber (509) antreibt, sodass sich der Schieber (509) zusammen mit dem Werkzeug (6) auf der Linearführungsschiene (508) bewegt;
wobei der CNC-Plandrehkopf (5) ferner einen elektrischen Schleifring (502), die Kupplung (503), ein erstes Spiralkegelrad (505) und ein zweites Spiralkegelrad (507) umfasst; wobei der elektrische Schleifring (502) dazu dient, den Wechselstrom-Servomotor (501) im rotierenden Zustand mit Strom zu versorgen; wobei der Wechselstrom-Servomotor (501) und die Antriebswelle (504) über die Kupplung (503) miteinander verbunden sind, sodass der Wechselstrom-Servomotor (501) die Antriebswelle (504) antreibt; wobei das erste Spiralkegelrad (505) an dem anderen Ende der Antriebswelle (504) angeordnet ist; wobei das zweite Spiralkegelrad (507) an der Kugelumlaufspindel (506) angeordnet ist; und wobei das erste Spiralkegelrad (505) mit dem zweiten Spiralkegelrad (507) in Eingriff steht;
wobei der CNC-Vertikalschlitten (3) eine Vertikalschlittensäule (301), einen Schlittenkörper (302), einen Schlitten-Servomotor (303), einen Schlitten-Ausgleichszylinder (304), ein Untersetzungsgetriebe (305), ein Spindel-Mutter-Paar (306) und eine Schlitten-Linearführungsschiene (307) umfasst; wobei die Vertikalschlittensäule (301) mit dem Maschinenbett (1) verbunden ist und zum Tragen des CNC-Vertikalschlittens (3) dient; wobei der Schlitten-Servomotor (303) an der Vertikalschlittensäule (301) montiert ist; wobei der Schlitten-Servomotor (303) mit dem Untersetzungsgetriebe (305) verbunden ist; wobei das Untersetzungsgetriebe (305) mit dem Spindel-Mutter-Paar (306) antriebsverbunden ist und zum Antreiben des Spindel-Mutter-Paars (306) dient; wobei das Spindel-Mutter-Paar (306) mit dem Schlittenkörper (302) verbunden ist; und wobei der Schlitten-Ausgleichszylinder (304) zum Gewichtsausgleich des CNC-Vertikalschlittens (3) dient.

2. Feinbohrmaschine für eine hochpräzise Radnabenbohrung nach Anspruch 1, **dadurch gekennzeichnet, dass** der Spindelstock (4) einen Hauptmotor (401) umfasst; wobei der Spindelstock (4) mit der Antriebswelle (504) verbunden ist und die Drehzahl des CNC-Plandrehkopfs (5) steuert; wobei der Hauptmotor (401) zur Drehzahlregelung dient; wobei die Drehzahl der Hauptspindel im Spindelstock (4) in einem Bereich von 50-500 rpm liegt; und wobei bei einer Frequenz von 50 Hz die Drehzahl der Hauptspindel (4) n = 250 rpm beträgt.

3. Feinbohrmaschine für eine hochpräzise Radnabenbohrung nach Anspruch 1, **dadurch gekennzeichnet, dass** die Feinbohrmaschine für Radnabenbohrungen ferner ein Hydrauliksystem (7) und ein elektrisches Steuersystem (8) umfasst; wobei das Hydrauliksystem (7) mit der hydraulischen selbstzentrierenden Spannvorrichtung (2) verbunden ist und dazu dient, der hydraulischen selbstzentrierenden Spannvorrichtung (2) hydraulische Antriebskraft bereitzustellen; und wobei das elektrische Steuersystem (8) mit dem Maschinenbett (1) verbunden ist und zum Steuern der der Feinbohrmaschine für Radnabenbohrungen zugeführten elektrischen Energie dient.

4. Feinbohrmaschine für eine hochpräzise Radnabenbohrung nach Anspruch 1, **dadurch gekennzeichnet, dass** die Feinbohrmaschine für Radnabenbohrungen ferner eine Werkzeugmaschinen-Schutzvorrichtung (9) umfasst; wobei die Werkzeugmaschinen-Schutzvorrichtung (9) auf dem Maschinenbett (1) montiert ist und zusammen mit dem Maschinenbett (1) die inneren Bauteile der Feinbohrmaschine für Radnabenbohrungen vor Beschädigung schützt; und wobei die Werkzeugmaschinen-Schutzvorrichtung (9) als teleskopierbare Schutzabdeckung aus Edelstahl ausgebildet ist.

5. Feinbohrmaschine für eine hochpräzise Radnabenbohrung nach Anspruch 1, **dadurch gekennzeichnet, dass** die Feinbohrmaschine für Radnabenbohrungen ferner eine Schmiervorrichtung (10) umfasst; wobei die Schmiervorrichtung (10) an dem CNC-Vertikalschlitten (3) und an dem Spindelstock (4) montiert ist und zum Schmieren innerer Teile der Feinbohrmaschine für Radnabenbohrungen dient.

6. Feinbohrmaschine für eine hochpräzise Radnabenbohrung nach Anspruch 1, **dadurch gekennzeichnet, dass** die Feinbohrmaschine für Radnabenbohrungen ferner ein automatisches Späneabfuhrsystem (11) umfasst; wobei das automatische Späneabfuhrsystem (11) im Maschinenbett (1) montiert ist; wobei das automatische Späneabfuhrsystem (11) einen automatischen Scharnierband-Späneförderer (1101) und einen Eisenspäne-Sammelbehälter (1102) umfasst; und wobei der automatische Scharnierband-Späneförderer (1101) dazu dient, bei der Bearbeitung entstehende Eisenspäne zu sammeln und die Eisenspäne in den Eisenspäne-Sammelbehälter (1102) abzuführen, sodass die entstandenen Eisenspäne automatisch beseitigt werden.

## Revendications

1. Aléseuse de haute précision pour l'usinage fin d'alésages de moyeux de roues de véhicules, **caractérisée en ce qu'**elle comprend : un bâti (1), un dispositif de serrage hydraulique à centrage automatique (2), une glissière verticale à commande numérique (3), un boîtier de broche (4), un plateau rotatif à commande numérique (5) et un outil de coupe (6);
ledit bâti (1) constitue la structure principale de l'aléseuse de haute précision pour l'usinage fin d'alésages de moyeux de roues de véhicules, et est destiné à supporter ladite aléseuse de haute précision pour l'usinage fin d'alésages de moyeux de roues de véhicules;
ledit dispositif de serrage hydraulique à centrage automatique (2) est destiné à placer une pièce à usiner, et est monté sur ledit bâti (1);
ladite glissière verticale à commande numérique (3) est destinée à commander les mouvements verticaux de ledit boîtier de broche (4), dudit plateau rotatif à commande numérique (5) et dudit outil de coupe (6), et est montée sur ledit bâti (1);
ledit boîtier de broche (4) est destinée à commander la vitesse de rotation dudit plateau rotatif à commande numérique (5) et dudit outil de coupe (6), et est montée sur ladite glissière verticale à commande numérique (3);
ledit plateau rotatif à commande numérique (5) est destiné à commander la distance horizontale entre ledit outil de coupe (6) et ladite pièce à usiner, et est monté sur ledit boîtier de broche (4);
ledit outil de coupe (6) est destiné à usiner ladite pièce à usiner, et est monté sur ledit plateau rotatif à commande numérique (5);
dans laquelle ledit plateau rotatif à commande numérique (5) comprend un servomoteur à courant alternatif (501), un arbre de transmission (504), une vis à billes (506), un coulisseau (509) et un rail de guidage linéaire (508); ledit servomoteur à courant alternatif (501) étant relié audit arbre de transmission (504) par l'intermédiaire d'un accouplement (503); ledit coulisseau (509) étant connecté de façon fixe à ladite vis à billes (506), ledit arbre de transmission (504) étant en prise avec ladite vis à billes (506) pour entraîner ladite vis à billes (506) et ledit coulisseau (509), ainsi que ledit outil de coupe (6), en déplacement sur ledit rail de guidage linéaire (508);
ledit plateau rotatif à commande numérique (5) comprend en outre un collecteur tournant (502), un accouplement (503), un premier engrenage conique hélicoïdal (505) et un second engrenage conique hélicoïdal (507); ledit collecteur tournant (502) étant destiné à alimenter électriquement en rotation ledit servomoteur à courant alternatif (501); ledit servomoteur à courant alternatif (501) et ledit arbre de transmission (504) étant reliés par l'intermédiaire dudit accouplement (503), de sorte que ledit servomoteur à courant alternatif (501) entraîne ledit arbre de transmission (504); ledit premier engrenage conique hélicoïdal (505) étant situé à l'autre extrémité dudit arbre de transmission (504), ledit second engrenage conique hélicoïdal (507) étant situé sur ladite vis à billes (506), ledit premier engrenage conique hélicoïdal (505) et ledit second engrenage conique hélicoïdal (507) étant en prise l'un avec l'autre;
ladite glissière verticale à commande numérique (3) comprend un montant de glissière (301), un corps de glissière (302), un servomoteur de glissière (303), un vérin d'équilibrage de glissière (304), un réducteur (305), un système vis-écrou (306) et des rails de guidage linéaire de glissière (307); ledit montant de glissière (301) étant relié audit bâti (1) et destiné à supporter ladite glissière verticale à commande numérique (3); ledit servomoteur de glissière (303) étant monté sur ledit montant de glissière (301); ledit servomoteur de glissière (303) étant relié audit réducteur (305); ledit réducteur (305) étant en liaison d'entraînement avec ledit système vis-écrou (306) pour entraîner ledit système vis-écrou (306); ledit système vis-écrou (306) étant relié audit corps de glissière (302); ledit vérin d'équilibrage de glissière (304) assurant le contrepoids de ladite glissière verticale à commande numérique (3).

2. Aléseuse de haute précision pour l'usinage fin d'alésages de moyeux de roues de véhicules selon la revendication 1, **caractérisée en ce que** ledit boîtier de broche (4) comprend un moteur principal (401); ledit boîtier de broche (4) étant reliée audit arbre de transmission (504) pour commander la vitesse de rotation dudit plateau rotatif à commande numérique (5); ledit moteur principal (401) étant destiné à la régulation de vitesse, la plage de vitesse de rotation de la broche à l'intérieur de ledit boîtier de broche (4) étant de 50 à 500 tr/min, et la vitesse de rotation de la broche (4) à une fréquence de 50 Hz étant de n = 250 tr/min.

3. Aléseuse de haute précision pour l'usinage fin d'alésages de moyeux de roues de véhicules selon la revendication 1, **caractérisée en ce que** ladite aléseuse de haute précision pour l'usinage fin d'alésages de moyeux de roues de véhicules comprend en outre un système hydraulique (7) et un système de commande électrique (8); ledit système hydraulique (7) étant relié audit dispositif de serrage hydraulique à centrage automatique (2) pour fournir une puissance hydraulique audit dispositif de serrage hydraulique à centrage automatique (2); ledit système de commande électrique (8) étant relié audit bâti (1) pour contrôler l'alimentation électrique fournie à ladite aléseuse de haute précision pour l'usinage fin d'alésages de moyeux de roues de véhicules.

4. Aléseuse de haute précision pour l'usinage fin d'alésages de moyeux de roues de véhicules selon la revendication 1, **caractérisée en ce que** ladite aléseuse de haute précision pour l'usinage fin d'alésages de moyeux de roues de véhicules comprend en outre une protection de machine-outil (9); ladite protection de machine-outil (9) étant montée sur ledit bâti (1) et protectant avec ledit bâti (1) contre l'endommagement des composants internes de ladite aléseuse de haute précision pour l'usinage fin d'alésages de moyeux de roues de véhicules; ladite protection de machine-outil (9) étant un protecteur télescopique en acier inoxydable.

5. Aléseuse de haute précision pour l'usinage fin d'alésages de moyeux de roues de véhicules selon la revendication 1, **caractérisée en ce que** ladite aléseuse de haute précision pour l'usinage fin d'alésages de moyeux de roues de véhicules comprend en outre un graisseur (10); ledit graisseur (10) étant monté respectivement sur ladite glissière verticale à commande numérique (3) et sur ledit boîtier de broche (4) pour lubrifier les composants internes de ladite aléseuse de haute précision pour l'usinage fin d'alésages de moyeux de roues de véhicules.

6. Aléseuse de haute précision pour l'usinage fin d'alésages de moyeux de roues de véhicules selon la revendication 1, **caractérisée en ce que** ladite aléseuse de haute précision pour l'usinage fin d'alésages de moyeux de roues de véhicules comprend en outre un système d'évacuation automatique des copeaux (11); ledit système d'évacuation automatique des copeaux (11) étant monté à l'intérieur dudit bâti (1); ledit système d'évacuation automatique des copeaux (11) comprenant un évacuateur de copeaux automatique à chaîne à plaques (1101) et un bac de collecte de copeaux (1102); ledit évacuateur de copeaux automatique à chaîne à plaques (1101) étant destiné à collecter les copeaux générés lors de l'usinage et à les évacuer dans ledit bac de collecte de copeaux (1102), permettant ainsi un nettoyage automatique des copeaux générés.
